# EUROPÄISCHE PATENTSCHRIFT

(11) **EP 2 636 536 B1**
(45) Veröffentlichungstag und Bekanntmachung des Hinweises auf die Patenterteilung: **22.07.2015**
(21) Anmeldenummer: 13157538.3
(22) Anmeldetag: 04.03.2013
(51) Int. Cl.: B42C 19/00, B42C 19/02

(54) **Umrüsten einer Fertigungsanlage für die Druckweiterverarbeitung**
Retrofitting of a production line for print finishing
Rééquipement d'une installation de fabrication pour le traitement d'impression ultérieur

(30) Priorität: 09.03.2012 CH 3392012
(43) Veröffentlichungstag der Anmeldung: 11.09.2013
(73) Patentinhaber: Müller Martini Holding AG, 6052 Hergiswil (CH)
(72) Erfinder: Abegglen, Christian, 8500 Frauenfeld (CH); Bracher, Markus, 6264 Pfaffnau (CH); Rickenbacher, Mark, 4450 Sissach (CH); Schmid, Christian, 4852 Rothrist (CH)

(56) Entgegenhaltungen:
- DE-A1- 19 859 333
- DE-A1-102010 015 128
- Dieter Liebau, Inés Heinze: "Industrielle Buchbinderei", 2001, Verlag Beruf+Schule, Itzelohe, XP002677535, ISBN: 3-88013-596-7 * Seite 519 *

## Beschreibung

Die vorliegende Erfindung betrifft ein Verfahren zum Umrüsten einer aus mehreren, jeweils eine Maschinensteuerung aufweisende Druckweiterverarbeitungsmaschinen bestehenden, eine Anlagensteuerung aufweisenden Fertigungsanlage, bei dem zur Verarbeitung von Teilprodukten zu Druckerzeugnissen aufeinanderfolgend unterschiedliche Fertigungsaufträge abgearbeitet werden. Zudem betrifft die Erfindung eine entsprechende Fertigungsanlage.

Bei der Druckweiterverarbeitung werden Vorprodukte, wie etwa einzelne, eine Mehrzahl von Seiten des fertigen Druckerzeugnisses aufweisende Druckbogen, durch mehrere zeitlich nacheinander auszuführende Verarbeitungsschritte zu fertigen Druckerzeugnissen, wie Zeitschriften, Katalogen, Büchern, Zeitungen oder ähnlichen Erzeugnissen, verarbeitet. Diese Verarbeitung wird auf einer Mehrzahl von zu Fertigungslinien verketteten Druckweiterverarbeitungsmaschinen durchgeführt. Dabei übernehmen Druckweiterverarbeitungsmaschinen die zur Herstellung der fertigen Druckprodukte dienenden Teilprodukte von einer vorgelagerten Druckweiterverarbeitungsmaschine und geben diese nach der Verarbeitung an eine nachfolgende Druckweiterverarbeitungsmaschine weiter.

Herkömmliche Druckmaschinen werden meistens "offfine" betrieben, d.h. die Druckmaschine wird unabhängig von der Druckweiterverarbeitung betrieben. Einzelne Bogen werden in der Druckmaschine hergestellt und dann zwischengelagert. Sobald alle Bogen die ein Buch bilden gedruckt sind, kann der Prozess der Druckweiterverarbeitung erfolgen.

Mit Digitaldruckmaschinen ist es möglich die Bogen eines Buches in der Folge zu drucken und damit Bogenpakete zu fertigen die ein Buch bilden. Solche Digitaldruckmaschinen werden häufig mit einer Druckweiterverarbeitung "inline" betrieben, d.h. die Digitaldruckmaschine ist mit der Druckweiterverarbeitung zu einer gemeinsamen Fertigungslinie verbunden.

Bei der Druckweiterverarbeitung kann z.B. eine Bindeanlage zum Einsatz kommen. Diese umfasst üblicherweise eine Zusammentragmaschine, mit der eine Anzahl von ein fertiges Druckerzeugnis bildenden Druckbogen zusammengetragen wird, eine Bindeeinrichtung, wie etwa einen Klebebinder, eine Abtransporteinrichtung, die bei Einsatz eines Klebebinders eine Abbindestrecke für den Klebstoff enthalten kann, eine Schneidmaschine, mit der die Seitenkanten des mit dem Klebebinder erhaltenen Teilprodukts ggf. dreiseitig beschnitten werden und eine Stapeleinrichtung, mit der die Druckprodukte gestapelt werden, wobei zusätzliche Druckweiterverarbeitungsmaschinen hinzukommen können, wie etwa eine Einsteckmaschine zum Einstecken von losen Produkten in die gebundenen Druckprodukte.

Fertigungsanlagen sind zum Teil lang und komplex und werden aus den o.g. Druckweiterverarbeitungsmaschinen zusammengesetzt. Die Reihenfolge in der die Druckweiterverarbeitungsmaschinen angeordnet sind, ist durch die an den Teilprodukten vorzunehmende Weiterverarbeitung gegeben. Abhängig vom Fertigungsprozess durchlaufen die Teilprodukte alle oder nur einen Teil dieser Druckweiterverarbeitungsmaschinen und werden in diesen bearbeitet. Eine Druckweiterverarbeitungsmaschine kann im Fall, dass sie keine aktive Verarbeitung ausführen soll, nur zum Transport der Teilprodukte eingesetzt werden.

Solche Fertigungslinien werden üblicherweise von mehreren Personen bedient. Bei einem Wechsel eines Fertigungsauftrags rüstet das dafür vorgesehene Bedienpersonal die Druckweiterverarbeitungsmaschinen um und Hilfspersonal entfernt oder führt entsprechende Teilprodukte zu. Üblicherweise werden die Druckweiterverarbeitungsmaschinen für jeden zu verarbeitenden Fertigungsauftrag in einer Fertigungsanlage konfiguriert und gemäss einem Fertigungsauftrag so eingerichtet, dass die Verarbeitung der Teilprodukte den Vorgaben entsprechend erfolgen kann.

Alternativ kann auch ein einziger Bediener der Reihe nach jede Druckweiterverarbeitungsmaschine einer Fertigungsanlage umrüsten. Nachdem der Bediener die letzte Druckweiterverarbeitungsmaschine umgerüstet hat, kann der neue Fertigungsauftrag gestartet werden. Dieses Vorgehen ist mit einer langen Umrüstdauer der ganzen Fertigungsanlage verbunden und erfordert deshalb eine lange Stillstandzeit für eine vorgeschaltete Digitaldruckmaschine. Für das Umrüsten der Fertigungsanlage von einem Fertigungsauftrag zum nächsten, wird diese zunächst leer gefahren und danach umgerüstet.

Mit der Digitaldrucktechnik wurde die Möglichkeit geschaffen den Druckprozess mit der Druckweiterverarbeitung zu einer gemeinsamen Fertigungsanlage zu verbinden und somit den gesamten Prozess "inline" zu betreiben. Wenn die Anzahl des Bedienpersonals an einer solchen Fertigungsanlage reduziert wird, steigt die Wirtschaftlichkeit solcher Digitaldruckfertigungsanlagen.

In vielen Fällen kann die Digitaldruckmaschine wesentlich schneller umgerüstet werden als die daran anschliessende Druckweiterverarbeitung. Ist die Umrüstzeit dieser Druckweiterverarbeitung nur unwesentlich grösser als die Umrüstzeit der Digitaldruckmaschine so kann die Digitaldruckmaschine sofort nach deren Umrüsten gestartet werden, wobei die Zwischenprodukte während des Umrüstens der Druckweiterverarbeitung in einen Puffer gefördert werden, während die anschliessende Druckweiterverarbeitung umgerüstet wird. Eine verhältnismässig lange Umrüstzeit der Druckweiterverarbeitung führt dagegen zu einer schlechten Auslastung der Digitaldruckmaschine.

Die Steuerung der Druckweiterverarbeitungsmaschinen erfolgt üblicherweise mittels eigener Maschinensteuerungen, die mittels standardisierten Busschnittstellen miteinander kommunizieren. Diese Maschinensteuerungen können zusätzlich mit einer Anlagensteuerung verbunden sein. Aus der vorveröffentlichten WO2012048435 A1 nach dem Anmeldetag veröffentlicht ist eine Anordnung von Druckweiterverarbeitungsmaschinen bekannt geworden, bei der eine zentrale Anlagensteuerung mit lokalen Maschinensteuerungen verbunden ist. Die Maschinensteuerungen ermitteln aus den von der Anlagensteuerung erhaltenen Steuerdaten die erforderlichen Umstellzeiten für die jeweiligen Druckweiterverarbeitungsmaschinen. Die errechneten Umstellzeiten werden von den Maschinensteuerungen an die Anlagensteuerung weitergeleitet, die ihrerseits dementsprechende Fördergutlücken für die gesamte Anlage ermittelt. Demnach erfolgt hierbei keine direkte Rückmeldung des aktuellen Einrichtzustands der jeweiligen Druckweiterverarbeitungsmaschine von den Maschinensteuerungen zur Anlagensteuerung.

Aus der EP1777078 A1 ist eine Fertigungsanlage für die Druckweiterverarbeitung bekannt, welche zwei Fertigungslinien besitzt. Diese bestehen jeweils aus Druckweiterverarbeitungsmaschinen. Dabei weisen die beiden Fertigungslinien sowohl gemeinsame als auch parallel geschaltete Druckweiterverarbeitungsmaschinen auf. Diese Fertigungsanlage ermöglicht es, dass Druckweiterverarbeitungsmaschinen leer gefahren und für einen neuen Fertigungsauftrag umgerüstet werden können, während parallel dazu geschaltete Druckweiterverarbeitungsmaschinen noch mit der Verarbeitung des aktuellen Fertigungsauftrags beschäftigt sind. Nachteilig erweist es sich, dass dazu eine relativ hohe Anzahl redundanter Druckweiterverarbeitungsmaschinen benötigt wird, was relativ hohe Gesamtkosten der Fertigungsanlage zur Folge hat.

Die DE102010015128 A1 offenbart eine einzelne als Klebebinder ausgeführte Druckweiterverarbeitungsmaschine mit einer Vielzahl von kontinuierlich umlaufenden Klammern einer Transportvorrichtung zum schnellen Umrüsten auf unterschiedliche Formate nacheinander zu bearbeitender Fertigungsaufträge. Dafür wird eine Taktzeit der Druckweiterverarbeitungsmaschine entsprechend der zum nachfolgenden Fertigungsauftrag erforderlichen Formatänderungen durch das Bilden von leeren Klammern der Transportvorrichtung für die Teilprodukte so verlängert, dass mehr Zeit für das Voreinstellen von Verarbeitungsstationen des Klebebinders auf den nachfolgendden Fertigungsauftrag zur Verfügung steht.

Dieses Dokument offenbart nicht, dass jede Druckweiterverarbeitungsmaschine eine Maschinensteuerung aufweist, wobei der Anlagensteuerung von der jeweiligen Maschinensteuerung übermittelt wird, dass die Druckweiterverarbeitungsmaschine bereit ist auf den nächsten Fertigungsauftrag umgerüstet zu werden, und wobei der Anlagensteuerung von der Maschinensteuerung der Abschluss des Umrüstens übermittelt wird.

Aufgabe der Erfindung ist es, ein Verfahren und eine Vorrichtung zum schnellen und personalsparenden Umrüsten einer aus automatisch und/oder teilautomatisch umrüstbaren Druckweiterverarbeitungsmaschinen bestehenden Fertigungsanlage zu schaffen.

Erfindungsgemäss wird diese Aufgabe durch ein Verfahren gelöst, bei dem zunächst ermittelt wird, wann ein letztes Teilprodukt eines ersten in der Fertigungsanlage abgearbeiteten Fertigungsauftrags eine Druckweiterverarbeitungsmaschine der Fertigungsanlage verlassen hat. Der Anlagensteuerung wird von der jeweiligen Maschinensteuerung übermittelt, dass die Druckweiterverarbeitungsmaschine bereit ist auf den nächsten Fertigungsauftrag umgerüstet zu werden. Die Anlagensteuerung übermittelt daraufhin der jeweiligen Maschinensteuerung die Anweisung für das Umrüsten. Diese Druckweiterverarbeitungsmaschine wird voll- oder teilautomatisch entsprechend den in der Fertigungsanlage zu verarbeitenden Teilprodukten des nächsten Fertigungsauftrags umgerüstet. Dabei wird ermittelt, wann das Umrüsten dieser Druckweiterverarbeitungsmaschine abgeschlossen ist. Daraufhin wird der Anlagensteuerung von der Maschinensteuerung der Abschluss des Umrüstens übermittelt. Vorteilhaft kann diese Druckweiterverarbeitungslinie nun bereits unmittelbar nach der erfolgten Umrüstung mit den Teilprodukten des nächsten Fertigungsauftrags beschickt werden.

In einer Ausführungsform des erfinderischen Verfahrens wird zumindest eine Druckweiterverarbeitungsmaschine der Fertigungsanlage in Segmente unterteilt und/oder aus zumindest einer Druckweiterverarbeitungsmaschine wird ein Segment gebildet. Dabei wird ein Segment umgerüstet, sobald ein letztes Teilprodukt eines Fertigungsauftrags dieses Segment verlassen hat. Die flexible und modulare Unterteilung der Fertigungsanlage in Segmente bietet den Vorteil, dass die Segmente als Abschnitte der Fertigungsanlage gemäss dem nachfolgenden Fertigungsauftrag umgerüstet werden können.

Gemäss einer weiteren Ausführungsform des erfindungsgemässen Verfahrens erfolgt das Umrüsten unmittelbar nachdem ein letztes Teilprodukt eines Fertigungsauftrags die Druckweiterverarbeitungsmaschine verlassen hat. Daraus ergibt sich der zusätzliche Vorteil, dass zwischen zwei Fertigungsaufträgen lediglich kurze Unterbrechungen auftreten.

Darüber hinaus kann ein zeitsparendes, durchgehendes Umrüsten der Fertigungsanlage dem jeweiligen Fertigungsauftrag entsprechend gestaltet werden, wenn die Druckweiterverarbeitungsmaschinen der Fertigungsanlage in der Reihenfolge, in der sie durch ein letztes Teilprodukt eines Fertigungsauftrags verlassen worden sind, nacheinander umgerüstet werden.

Eine weitere Ausführungsform des Verfahrens ergibt sich dadurch, dass das Umrüsten der Druckweiterverarbeitungsmaschinen und/oder der Segmente der Fertigungsanlage, über eine Anlagensteuerung erfolgt, die das Umrüsten koordiniert und/oder steuert. Dadurch ergibt sich ein zentraler Kontroll- und Steuerpunkt, von wo aus beispielsweise eine gewünschte Anpassung des Verfahrens ermöglicht wird.

In einer weiteren Ausführungsform des erfindungsgemässen Verfahrens erfolgt eine Konfiguration der Fertigungsanlage zu einer Fertigungslinie über das Ansteuern von Druckweiterverarbeitungsmaschinen und/oder Segmenten der Fertigungsanlage in Abhängigkeit von dem jeweiligen Fertigungsauftrag über die Maschinensteuerungen und/oder die übergeordnete Anlagensteuerung. Die Druckweiterverarbeitungsmaschinen und/oder die Segmente der Fertigungslinie werden umgerüstet, nachdem ein letztes Teilprodukt eines Fertigungsauftrags diese Druckweiterverarbeitungsmaschine und/oder dieses Segment verlassen hat. Dadurch ergibt sich für jeden Fertigungsauftrag eine optimale Einstellmöglichkeit der gesamten Fertigungsanlage.

Zudem wird die Aufgabe durch eine Fertigungsanlage mit einer Anlagensteuerung und bestehend aus mehreren jeweils eine Maschinensteuerung aufweisende Druckweiterverarbeitungsmaschinen gelöst. Dabei ist die Fertigungsanlage dazu geeignet, zur Verarbeitung von Teilprodukten zu Druckerzeugnissen aufeinanderfolgend unterschiedliche Fertigungsaufträge abzuarbeiten. Dabei weist die Druckweiterverarbeitungsmaschinen jeweils zumindest eine voll- und/oder eine teilautomatische, mit der Anlagensteuerung verbundene Stelleinrichtung auf, wobei die Anlagensteuerung mit einer Produkterkennungseinrichtung verbunden ist und wobei die Fertigungsanlage in Betrieb das erfindungsgemässe Verfahren ausführt.

In einer Ausführungsform der erfindungsgemässen Fertigungsanlage ist zumindest eine Druckweiterverarbeitungsmaschine in Segmente unterteilt, und/oder zumindest eine Druckweiterverarbeitungsmaschine ein Segment bildet, wobei die einzelnen Segmente voll- und/oder teilautomatisch umrüstbar ausgebildet sind. Die flexible und modulare Unterteilung der Fertigungsanlage in Segmente bietet den Vorteil, dass die Segmente als Abschnitte der Fertigungsanlage gemäss dem nachfolgenden Fertigungsauftrag umgerüstet werden können.

In einer weiteren Ausführungsform der erfindungsgemässen Fertigungsanlage sind mehrere Druckweiterverarbeitungsmaschinen und/oder Segmente der Fertigungsanlage in Abhängigkeit vom jeweiligen Fertigungsauftrag durch die Anlagensteuerung zu einer Fertigungslinie konfigurierbar. Die Druckweiterverarbeitungsmaschinen und/oder Segmente der Fertigungsanlage sind dabei voll- oder teilautomatisch umrüstbar ausgebildet. Dadurch kann die Fertigungsanlage durch die modulare Ausgestaltung der Fertigungsanlage schnell den Anforderungen eines neuen Fertigungsauftrags entsprechend umgerüstet werden.

In einer weiteren Ausführungsform der erfindungsgemässen Fertigungsanlage sind die Anlagensteuerung sowie die Maschinensteuerungen über ein gemeinsames Bussystem miteinander verbunden. Daraus ergibt sich vorzugsweise die einzelne Ansteuerbarkeit und Abfragemöglichkeit der Druckweiterverarbeitungsmaschinen.

In einer weiteren Ausführungsform der erfindungsgemässen Fertigungsanlage sind die Maschinensteuerungen der Druckweiterverarbeitungsmaschinen mit Sensoren zur Produkterkennung verbunden. Diese können je nach Druckweiterverarbeitungsmaschine unterschiedlich ausgeführt und angeordnet sein, um beispielsweise einen genauen Zeitpunkt des Verlassens eines Teilprodukts der Druckweiterverarbeitungsmaschine zu erfassen und übermitteln.

Eine erfindungsgemässe Fertigungsanlage kann z.B. eine Fertigungsanlage zur Herstellung klebegebundener, sammelgehefteter oder fadengebundener Produkte sein. Natürlich kann die Fertigungsanlage im Sinne der Anmeldung auch eine Druckmaschine, insbesondere eine als Digitaldruckmaschine ausgebildete Druckweiterverarbeitungsmaschine aufweisen. Hier kann zusätzlich ein Puffer zwischen der Digitaldruckmaschine und einer der weiteren Druckweiterverarbeitungsmaschinen angeordnet sein, um einen Zeitgewinn für die Umrüstung nachfolgender Druckweiterverarbeitungsmaschinen zu bieten.

Nachstehend wird die Erfindung unter Bezugnahme auf die Figuren, auf die hinsichtlich aller erfindungswesentlichen und in der Beschreibung nicht näher herausgestellten Einzelheiten ausdrücklich Bezug genommen wird, erläutert. Alle für das unmittelbare Verständnis der Erfindung nicht wesentlichen Elemente sind weggelassen worden. Gleiche Elemente sind in den einzelnen Figuren mit den gleichen Bezugszeichen versehen. In der Zeichnung zeigt:
Fig. 1 eine schematische Darstellung einer Vorrichtung, bei der die Druckweiterverarbeitungsmaschinen automatische Stelleinrichtungen zum Umrüsten aufweisen,
Fig. 2 ein Flussdiagramm von Fertigungslinien,
Fig. 3 Flussdiagrammabschnitt vor einem Fertigungsauftragswechsel, und
Fig. 4 Flussdiagrammabschnitt beim Wechsel eines Fertigungsauftrags.

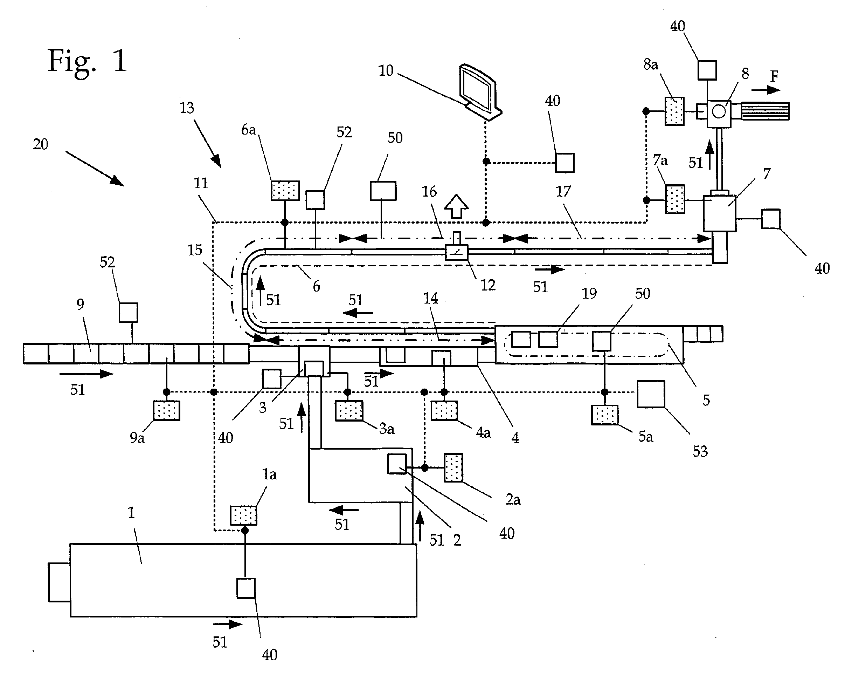

Die Erfindung wird nachfolgend anhand eines Ausführungsbeispiels näher erläutert. In Fig. 1 ist eine Fertigungsanlage 20 mit mehreren Druckweiterverarbeitungsmaschinen 1 bis 9 vereinfacht dargestellt. Folgende Komponenten bilden diese Fertigungsanlage 20:
Eine als Digitaldruckmaschine ausgebildete Druckweiterverarbeitungsmaschine 1,
eine als Puffer ausgebildete Druckweiterverarbeitungsmaschine 2,
eine als Buchblockanleger ausgebildete Druckweiterverarbeitungsmaschine 3,
eine als Vorsatzbogenanleger ausgebildete Druckweiterverarbeitungsmaschine 4,
eine als Bindeeinrichtung ausgebildete Druckweiterverarbeitungsmaschine 5,
eine als Abtransportorgan ausgebildete Druckweiterverarbeitungsmaschine 6,
eine als Schneidmaschine ausgebildete Druckweiterverarbeitungsmaschine 7,
eine als Stapler ausgebildete Druckweiterverarbeitungsmaschine 8, und
eine als Zusammentragmaschine ausgebildete Druckweiterverarbeitungsmaschine 9.

Alle Druckweiterverarbeitungsmaschinen 1 bis 9 der Fertigungsanlage 20 weisen eigene Maschinensteuerungen 1a bis 9a und je eine Statusanzeige 53 auf, die über ein Bussystem 11 mit einer übergeordneten Anlagensteuerung 10 verbunden sind. Das als Drahtverbindung dargestellte Bussystem 11 kann auch drahtlos, beispielsweise basierend auf optischen Signalverbindungen ausgebildet sein.

Die Maschinensteuerungen 1a bis 9a sind für die Funktionen der betreffenden Druckweiterverarbeitungsmaschine zuständig. Die übergeordnete Anlagensteuerung 10 koordiniert das Ansteuern der Druckweiterverarbeitungsmaschinen 1 bis 9 im Verbund. Die Anlagensteuerung 10 kann die Druckweiterverarbeitungsmaschinen 1 bis 9 zu unterschiedlichen Fertigungslinien 13 verbinden und/oder konfigurieren.

Je nachdem wie die Druckweiterverarbeitungsmaschinen 1 bis 9 in einer Fertigungslinie 13 konfiguriert werden, lassen sich damit auf folgende Weise gebundene Bücher oder Buchblocks herstellen. In den nachfolgenden drei Varianten der Buchherstellung umfasst die Fertigungslinie 13 mit einem Produktfluss 51 die o.a. Druckweiterverarbeitungsmaschinen 1 bis 9, wobei keine Druckweiterverarbeitungsmaschinen 1 bis 9 der gleichen Art parallel geschaltet sind.

Gemäss einer ersten Fertigungslinie 13 erfolgt das Zusammentragen von Bogen in der Zusammentragmaschine 9 und das Transportieren der Bogenstapel über den Vorsatzbogenanleger 4 in die Bindeeinrichtung 5. In einer als Klebebinder ausgebildeten Bindeeinrichtung werden die Bogenstapel am Rücken bearbeitet und mit Klebstoff versehen, sowie der Umschlag angelegt und der Buchrücken geformt. Das Abtransportorgan 6 befördert die sogenannten Rohbücher zur Schneidmaschine 7, wobei der Klebstoff abkühlt. In der Schneidmaschine 7, die z.B. als Dreischneider ausgebildet ist, werden die Rohbücher am Kopf, Fuss und an der Frontseite geschnitten, so dass ein fertiges Buch entsteht. Im Stapler 8 werden die Bücher gestapelt und ausgelegt.

Gemäss einer zweiten Fertigungslinie 13 werden in der Digitaldruckmaschine 1 die einzelnen Seiten eines Buches gedruckt und zusammengebracht, wobei zusammengetragene Bogenstapel entstehen, die dann einem Puffer 2 zugeführt werden. Der Puffer 2 fördert die Bogenstapel über einen Buchblockanleger 3 vor dem Vorsatzbogenanleger 4 in eine Transportkette einer Überführung ein. Die Bogenstapel gelangen über den Vorsatzbogenanleger 4 zur Bindeeinrichtung 5 von wo aus die Verarbeitung wie in der o.a. ersten Variante fortgesetzt wird.

In einer dritten Fertigungslinie 13 werden Bogenstapel in der Zusammentragmaschine 9 gebildet und mit Bogenstapeln aus der Digitaldruckmaschine 1 zu einem kompletten Bogenstapel ergänzt, welcher ein Buch bildet, zusammen gefügt. Das Zusammenfügen erfolgt im Buchblockanleger 3 wobei Bogenstapel aus der Zusammentragmaschine 9 mit Bogenstapeln aus dem Buchblockanleger 3 beispielsweise in die gleiche Teilung einer als Transportkette ausgebildeten Transportorgans zusammengefügt werden. Die Verarbeitung zu fertigen Büchern erfolgt wie in den o.a. Varianten 1 und 2.

Bei der Buchblockherstellung werden im Vorsatzbogenanleger 4 Vorsätze aufgeklebt und danach wird der so gebildete Bogenstapel der Bindeeinrichtung zugeführt. In der als Klebebinder ausgebildeten Bindeeinrichtung 5 werden die Bogenstapel am Rücken bearbeitet und/oder gepresst und mit Klebstoff versehen. Der Klebstoff wird mit einem Fälzelstreifen abgedeckt und anschliessend werden die rohen Buchblocks dem Abtransportorgan übergeben. Das Abkühlen des Klebstoffs, der Dreiseitenbeschnitt und das Stapeln erfolgt wie bei der Buchherstellung. Die Bogenstapel können wie in den drei o.a. Varianten der Buchherstellung zusammengestellt werden.

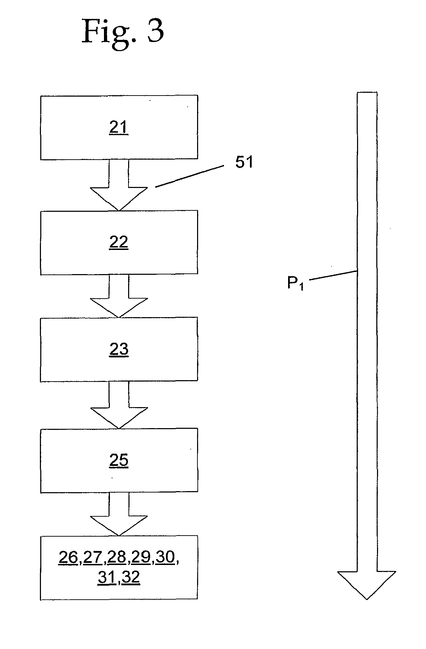

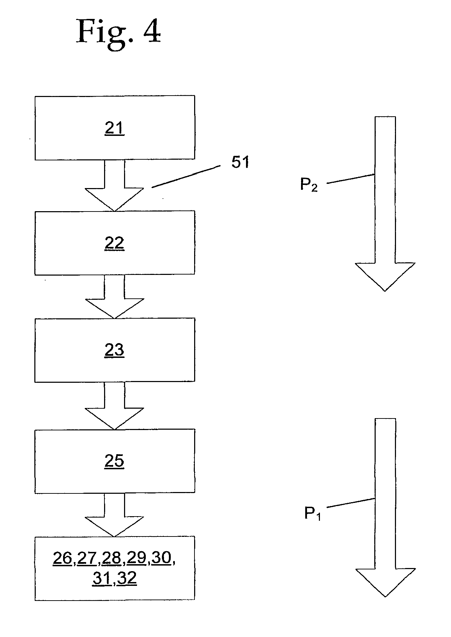

Die o.a. Verarbeitungsprozesse werden durch die Anlagensteuerung 10 gesteuert auf der Fertigungslinie 13 ausgeführt. Ferner kann die Anlagensteuerung 10 für die Prozesssteuerung zwischen den Druckweiterverarbeitungsmaschinen 1 bis 9, den Workflow und das Störungs- und Alarmmanagement zuständig sein. Eine zum Workflow gehörende Funktion ist das Steuern des Umrüstens der Druckweiterverarbeitungsmaschinen und die rechtzeitige Übertragung der zum neuen Fertigungsauftrag gehörenden Parameter. Die Anlagensteuerung 10 kann mit einer Produkterkennungseinrichtung 40 und für den Austausch von Daten zusätzlich mit weiteren Rechnern innerhalb eines Betriebs verbunden sein. Dadurch können beispielsweise aus einer zentralen Fertigungsauftragsverwaltung die Fertigungsaufträge P₁, P₂, ...Pₙ (P₁, P₂ aus Fig. 3 und 4) an die Fertigungslinie 13 übermittelt und einer Betriebsdatenerfassungseinrichtung die Betriebsdaten übermittelt oder es kann eine Verbindung mit dem Internet aufgebaut werden. Jeweils nachdem ein letztes Teilprodukt eines Fertigungsauftrags P₁, P₂, ...Pₙ eine Druckweiterverarbeitungsmaschine 1 bis 9 verlassen hat, wird diese voll- oder teilautomatisch über eine Stelleinrichtung 50 entsprechend den in der Fertigungsanlage 20 zu verarbeitenden Teilprodukten des nächsten Fertigungsauftrags P₁, P₂, ...Pₙ umgerüstet.

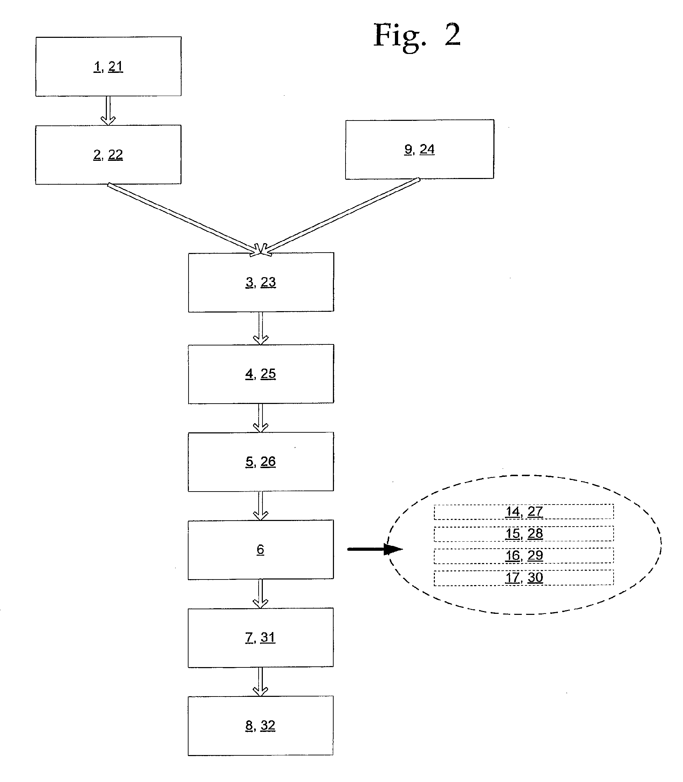

Die Fig. 2 stellt drei aus der in Fig. 1 dargestellten Fertigungsanlage 20 gemäss der drei o.a. Varianten zur Buchherstellung gebildete Fertigungslinien 13 in einem Flussdiagramm dar. Die drei Fertigungslinien 13 werden dabei in Abschnitte, nachfolgend als Segmente 21 bis 32 bezeichnet, aufgeteilt. Die einzelnen Segmente entsprechen weitgehend den Druckweiterverarbeitungsmaschinen 1 bis 9. Diese Aufteilung ist jedoch nicht zwingend. Jede Druckweiterverarbeitungsmaschine 1 bis 9 kann ihrerseits in Segmente 19 unterteilt werden, oder es können auch Druckweiterverarbeitungsmaschinen zu einem Segment zusammengefasst werden, wenn dies sinnvoll ist. Beispielsweise ist es für das Abtransportorgan 6 sinnvoll, die gesamte Transportstrecke in weitere Segmente, in Fig. 1 als Transportbänder 14 bis 17 dargestellt, zu unterteilen. Diese vier Transportbänder sind hier beispielhaft als Segmente der als Abtransportorgan ausgebildete Druckweiterverarbeitungsmaschine 6 dargestellt, wobei natürlich auch andere Druckweiterverarbeitungsmaschinen 1 bis 9 in Segmente 19 unterteilt werden können. Dem Transportband 16 ist eine Notauslageweiche 12 zugeordnet, wie in Fig. 1 dargestellt, die zum Vermeiden von Staus auf oder nach dem Abtransportorgan 6, bei einer eventuellen Fehlfunktion einer Druckweiterverarbeitungsmaschine, vorgesehen ist.

Zur Verarbeitung von Teilprodukten kann die Anlagensteuerung 10 die Fertigungsanlage (20) durch eine logische Aneinanderreihung der einzelnen Segmente 21 bis 32 zu einer Fertigungslinie 13 konfigurieren. Die Konfiguration kann je nach Fertigungsauftrag P₁, P₂, ...Pₙ geändert werden. Für jeden Fertigungsauftrag P₁, P₂, ...Pₙ ist eine definierte Konfiguration notwendig, damit die Teilprodukte auf die gewünschte Art und Weise hergestellt werden.

In den Ausführungsbeispielen gemäss Fig. 3 und 4 steuert die Anlagensteuerung 10 die Fertigungslinie 13 so an, dass darauf mehrere Fertigungsaufträge P₁, P₂, ...Pₙ zwar gleichzeitig, aber auf unterschiedlichen Segmenten der Fertigungslinie verarbeitet werden. In Fig. 3 bilden die Segmente 21 bis 23 und 25 bis 32 die Fertigungslinie 13. Jedes Segment bekommt von der Anlagensteuerung 10 die Aufgabe einen Fertigungsauftrag P₁ zu verarbeiten.

In Fig. 4 wird ein Fertigungsauftragswechsel von dem Fertigungsauftrag P₁ auf einen Fertigungsauftrag P₂ gezeigt. Die Segmente 25 bis 32 bearbeiten den Fertigungsauftrag P₁. In Segment 21 ist bereits der Fertigungsauftrag P₂ in Bearbeitung. In Segment 23 befindet sich die entsprechende Druckweiterverarbeitungsmaschine hingegen in einem Umrüst-Vorgang. Nachdem das letzte Buch des Fertigungsauftrags P₁ das Segment 23 verlassen hat, meldet die Maschinensteuerung dass das Segment 23 den Fertigungsauftrag P₁ beendet hat.

Die Anlagensteuerung 10 übermittelt dem Segment die Anweisung, auf den Fertigungsauftrag P₂ umzurüsten. Die Maschinensteuerung bewirkt darauf den Umrüst-Vorgang der entsprechenden Druckweiterverarbeitungsmaschine des Segments für den neuen Fertigungsauftrag.

In Segment 22 hat die Maschinensteuerung das Umrüsten dieses Abschnitts veranlasst und den Abschluss des Umrüstens der Anlagensteuerung 10 mitgeteilt. Die Anlagensteuerung 10 antwortet zum gegebenen Zeitpunkt mit dem Befehl den Fertigungsauftrag P₂ zu verarbeiten. Das Segment 22 kann die Teilprodukte für den Fertigungsauftrag P₂ aus dem vorgelagerten Segment 21 übernehmen und ist demnach wieder betriebsbereit für den Fertigungsauftrag P₂.

Die Fertigungsauftragsdaten für den Fertigungsauftrag P₂ können schon vor dem Umrüsten der Fertigungslinie von Fertigungsauftrag P₁ auf Fertigungsauftrag P₂ an die Druckweiterverarbeitungsmaschinen geschickt werden. Die Druckweiterverarbeitungsmaschinen kann vor und zum Zeitpunkt des Umrüstens zumindest einen weiteren Fertigungsauftrag in ihre Steuerung übernehmen.

Mit dem beschriebenen Verfahren ist es demnach möglich, gleichzeitig mehrere Fertigungsaufträge P₁, P₂, ...Pₙ auf der Fertigungslinie 13 zu bearbeiten. Zwischen den Fertigungsaufträgen liegt mindestens jene Zeitspanne, die benötigt wird, um jenes Segment der Fertigungslinie 13 umzurüsten, welches die längste Umrüstzeit benötigt.

Mittels der Anlagensteuerung 10 lassen sich die Druckweiterverarbeitungsmaschinen 1 bis 9 der Fertigungslinie 13 über die entsprechenden Maschinensteuerungen 1a bis 9a konfigurieren bzw. an den zu fertigenden Fertigungsauftrag anpassen. Die Anwendung des o.a. Verfahrens ist nicht nur bei der Konfiguration der Fertigungsanlage 20 zu Klebebindelinien beschränkt. Es lässt sich ebenso bei der Konfiguration der Fertigungsanlagen 20, die aus miteinander in unterschiedlicher Art verkettbaren Druckweiterverarbeitungsmaschinen 1 bis 9 gebildet sind, zu Sammelheftlinien, Einstecklinien und ähnlichen Fertigungslinien der Druckweiterverarbeitung anwenden.

Eine Fertigungslinie für die Inline-Herstellung von digital bedruckten Hartdeckenbücher kann beispielsweise folgende Druckweiterverarbeitungsmaschinen aufweisen: Eine Lesebandeinlegemaschine kann hier nach der Schneidmaschine 7 zum Einbringen eines Lesebandes in einen Buchblock angeordnet sein. Weiterhin ist anschliessend eine Bucheinhängestrasse zum Runden, Hinterkleben und Einhängen des Buchblocks sowie zum Einbrennen und Einpressen eines Falzes angeordnet.

Eine weitere Fertigungslinie für die Inline-Herstellung von sammelgehefteten Digitaldruckprodukten kann weiterhin folgende Druckweiterverarbeitungsmaschinen aufweisen:
- eine Falz- und Sammeleinrichtung zum Erzeugen eines Pflugfalzes, schneiden auf Rückenlänge und sammeln zu einzelnen Teilprodukten,
- einen Sammelhefter, eine Heftvorrichtung mit einem oder mehreren Anlegern, Heftaggregaten und Dreischneider,
- eine Folieneinschlagmaschine, mit der einzelne Produkte in eine Klarsichtfolie eingeschlagen werden,
- eine Umreifungsmaschine, die ein Band um einen Stapel aus fertigen Druckerzeugnissen legt, damit der Stapel zusammenhält, und
- eine Palettiereinrichtung, die die Produktstapel auf Paletten abgelegt.

Die Maschinensteuerungen 1a bis 9a erkennen und melden zu jedem Zeitpunkt ihren Zustand. Jede Maschinensteuerung 1a bis 9a erkennt dabei mit Hilfe von Sensoren 52 wo sich Teilprodukte befinden und verfolgt diese. Durch die Produktverfolgung kann die Maschinensteuerung 1a bis 9a ermitteln, wann sie das letzte Teilprodukt des auszuführenden Fertigungsauftrags P₁, P₂, ...Pₙ verarbeitet hat und meldet dies der Anlagensteuerung 10. Die Maschinensteuerungen 1a bis 9a der Druckweiterverarbeitungsmaschinen 1 bis 9 erkennen, wann Teilprodukte ausgeschleust oder entfernt werden und meldet dies ebenfalls der Anlagensteuerung 10. Die Anlagensteuerung 10 verarbeitet diese Information, indem sie die notwendige Anzahl von Teilprodukten eines Fertigungsauftrags je nach den gewählten Bedienereinstellungen erhöht und/oder in einem sogenannten "JMF"- (Job Messaging Format-) File vermerkt. Bei einer Erhöhung der Anzahl von Teilprodukten eines Fertigungsauftrags wird dies der ersten Druckweiterverarbeitungsmaschine in der Fertigungslinie 13 mitgeteilt und diese produziert die neue Anzahl von Teilprodukten, die zur Erreichung der Fertigungsauftragsauflage notwendig sind. Hat die eine Druckweiterverarbeitungsmaschine erforderliche Stückzahl von Teilprodukten eines Fertigungsauftrags erreicht, meldet sie dies der Anlagensteuerung 10. Diese koordiniert die weiteren Aktivitäten der Druckweiterverarbeitungsmaschinen. Dieser Vorgang kann ein Leerfahren und Stoppen, oder ein Umrüsten auf einen neuen Fertigungsauftrag sein.

Als zusätzliches Hilfsmittel können an den Teilprodukten Identifikationsmerkmale angebracht werden, mit denen die Maschinensteuerung die Produktverfolgung kontrolliert und/oder steuert.

Befindet sich kein Fertigungsauftrag in der Fertigungslinie so kann das Umrüsten der Druckweiterverarbeitungsmaschinen auch gleichzeitig erfolgen. Das heisst; alle zu einer Fertigungslinie konfigurierten Druckweiterverarbeitungsmaschinen 1 bis 9 werden auf einen nachfolgenden, durch die Anlagensteuerung 10 vorgegebenen Fertigungsauftrag umgerüstet, sobald dies durch die Anlagensteuerung 10 initiiert wird.

Kann eine Druckweiterverarbeitungsmaschine 1 bis 9 das Umrüsten nicht ohne den Eingriff von Bedienpersonal ausführen, so wird wie folgt verfahren: Die Maschinensteuerung 1a bis 9a meldet der Anlagensteuerung 10 wenn ein ihr zugeteiltes Segment 21 bis 32 den Fertigungsauftrag P₁ beendet hat. Die Anlagensteuerung 10 ordnet das Umrüsten dieses Segments auf den Fertigungsauftrag P₂ an. Ist nun bei einer teilautomatisch umrüstbaren Druckweiterverarbeitungsmaschine 1 bis 9 ein Handeingriff durch den Bediener notwendig, so wird die Maschine gestoppt und der Bediener wird aufgefordert, den notwendigen Handeingriff vorzunehmen. Sobald der Bediener diesen Handeingriff vorgenommen hat, bestätigt er dies durch Eingabe an der Maschinenbedienung und das Umrüsten des Segments wird, wie oben beschrieben, automatisch weitergeführt.

Für ein rasches und effizientes Umrüsten der Fertigungsanlage 20 von einem Fertigungsauftrag P₁, P₂, ...Pₙ auf den nächsten, werden möglichst Druckweiterverarbeitungsmaschinen eingesetzt, die keine Handeingriffe beim Umrüsten erfordern. Druckweiterverarbeitungsmaschinen 1 bis 9 ohne die Notwendigkeit solcher Handeingriffe sind mit motorisierten Verstellachsen ausgerüstet und verfügen beispielsweise über Mehrfachanleger zur Beschickung von Vorsätzen am Vorsatzbogenanleger und Umschlägen an der Bindeeinrichtung. Dadurch wird der Austausch der Teilprodukte, in unserem Beispiel die Vorsätze und die Umschläge vom Umrüstprozess entkoppelt. Der Bediener kann die übrig gebliebenen Vorsätze und/oder Umschläge des vorangehenden Fertigungsauftrags während eines laufenden Fertigungsauftrags entnehmen und die Vorsätze und/oder Umschläge des nächsten Fertigungsauftrags auflegen ohne den laufenden Fertigungsauftrag zu beeinflussen.

Eine weitere Möglichkeit ist der Einsatz von mehrfach eingebauten Bearbeitungsstationen innerhalb einer Druckweiterverarbeitungsmaschine 1 bis 9. So kann beispielsweise eine Bindeeinrichtung mit mehreren gleichen Bearbeitungsstationen ausgerüstet werden, die je nach den Anforderungen des Fertigungsauftrags eingesetzt werden. Für das Anbringen eines Fälzelstreifens an einen Buchrücken werden beispielsweise in einer Pressstation andere Pressleisten benötigt als für das Anbringen von Umschlägen. Mit zwei Pressstationen, bei denen die eine Pressstation mit Pressleisten für die Verarbeitung von Fälzelstreifen und die andere Pressstation mit Pressleisten für die Verarbeitung von Umschlägen ausgerüstet ist, lässt sich das Umrüsten ohne Handeingriff durchführen.

## Patentansprüche

1. Verfahren zum Umrüsten einer aus mehreren, jeweils eine Maschinensteuerung (1a, 2a,.., 9a) aufweisende Druckweiterverarbeitungsmaschinen (1, 2, ..., 9) bestehenden, eine Anlagensteuerung (10) aufweisenden Fertigungsanlage (20), bei dem zur Verarbeitung von Teilprodukten zu Druckerzeugnissen aufeinanderfolgend unterschiedliche Fertigungsaufträge (P₁, P₂, ...Pₙ) abgearbeitet werden,
wobei
- ermittelt wird, wann ein letztes Teilprodukt eines ersten in der Fertigungsanlage (20) abgearbeiteten Fertigungsauftrags (P₁, P₂, ...Pₙ) eine Druckweiterverarbeitungsmaschine (1, 2, ..., 9) der Fertigungsanlage (20) verlassen hat,
- der Anlagensteuerung (10) von der jeweiligen Maschinensteuerung (1a, 2a,.., 9a) übermittelt wird, dass die Druckweiterverarbeitungsmaschine (1, 2, ..., 9) bereit ist auf den nächsten Fertigungsauftrag (P₁, P₂, ...Pₙ) umgerüstet zu werden,
- die Anlagensteuerung (10) der jeweiligen Maschinensteuerung (1a, 2a,.., 9a) die Anweisung für das Umrüsten übermittelt, wobei
- die Druckweiterverarbeitungsmaschine (1, 2, ..., 9) voll- oder teilautomatisch entsprechend den in der Fertigungsanlage zu verarbeitenden Teilprodukten des nächsten Fertigungsauftrags (P₁, P₂, ...Pₙ) umgerüstet wird, und
- ermittelt wird, wann das Umrüsten dieser Druckweiterverarbeitungsmaschine (1, 2, ..., 9) abgeschlossen ist, worauf
- der Anlagensteuerung (10) von der Maschinensteuerung (1a, 2a,.., 9a) der Abschluss des Umrüstens übermittelt wird.

2. Verfahren nach Anspruch 1, **dadurch gekennzeichnet, dass** zumindest eine Druckweiterverarbeitungsmaschine (1, 2, ..., 9) der Fertigungsanlage (20) in Segmente (21,..,32) unterteilt wird und/oder aus zumindest einer Druckweiterverarbeitungsmaschine (1, 2, ..., 9) ein Segment (21,..,32) gebildet wird und ein Segment (21,..,32) umgerüstet wird, sobald ein letztes Teilprodukt eines Fertigungsauftrags (P₁, P₂, ...Pₙ₎ dieses Segment (21,..,32) verlassen hat.

3. Verfahren nach Anspruch 1 oder **2, dadurch gekennzeichnet, dass** das Umrüsten unmittelbar nachdem ein letztes Teilprodukt eines Fertigungsauftrags (P₁, P₂, ...Pₙ) die Druckweiterverarbeitungsmaschine (1, 2, ..., 9) oder das Segment (21,..,32) verlassen hat, erfolgt.

4. Verfahren nach einem der Ansprüche 1 bis 3, **dadurch gekennzeichnet, dass** die Druckweiterverarbeitungsmaschinen (1, 2, ..., 9) der Fertigungsanlage (20) in der Reihenfolge, in der sie durch ein letztes Teilprodukt eines Fertigungsauftrags (P₁, P₂, ...Pₙ) verlassen worden sind, nacheinander umgerüstet werden.

5. Verfahren nach einem der Ansprüche 1 bis 4, **dadurch gekennzeichnet, dass** das Umrüsten der Druckweiterverarbeitungsmaschinen (1, 2, ..., 9) und/oder Segmente (21,..,32) der Fertigungsanlage (20) zentral koordiniert und/oder gesteuert wird.

6. Verfahren nach einem der Ansprüche 1 bis 5, **dadurch gekennzeichnet, dass** mehrere Druckweiterverarbeitungsmaschinen (1, 2, ..., 9) und/oder Segmente (21,..,32) der Fertigungsanlage (20) in Abhängigkeit vom jeweiligen Fertigungsauftrag zu einer Fertigungslinie konfiguriert werden und die Druckweiterverarbeitungsmaschinen (1, 2, ..., 9) und/oder die Segmente (21,..,32) der Fertigungslinie umgerüstet werden, nachdem ein letztes Teilprodukt eines Fertigungsauftrags (P₁, P₂, ...Pₙ) diese Druckweiterverarbeitungsmaschine (1, 2, ..., 9) und/oder dieses Segment (21,..,32) verlassen hat.

7. Verfahren nach Anspruch 6, **dadurch gekennzeichnet, dass** die Konfiguration der Fertigungslinie über die Anlagensteuerung (10) erfolgt.

8. Fertigungsanlage mit einer Anlagensteuerung (10) und bestehend aus mehreren jeweils eine Maschinensteuerung (1a, 2a,.., 9a) aufweisende Druckweiterverarbeitungsmaschinen (1, 2, ..., 9), wobei die Fertigungsanlage geeignet ist, zur Verarbeitung von Teilprodukten zu Druckerzeugnissen aufeinanderfolgend unterschiedliche Fertigungsaufträge (P₁, P₂, ...Pₙ) abzuarbeiten und wobei die Druckweiterverarbeitungsmaschinen (1, 2, ..., 9) jeweils zumindest eine vollund/oder eine teilautomatische, mit der Anlagensteuerung (10) verbundene Stelleinrichtung (50) aufweisen und dass die Anlagensteuerung (10) mit einer Produkterkennungseinrichtung (40) verbunden ist, wobei die Fertigungsanlage in Betrieb das Verfahren nach einem der Ansprüche 1 bis 7 ausführt.

9. Fertigungsanlage nach Anspruch 8, **dadurch gekennzeichnet, dass** zumindest eine Druckweiterverarbeitungsmaschine (1, 2, ..., 9) in Segmente (21,..,32) unterteilt ist, und/oder zumindest eine Druckweiterverarbeitungsmaschine (1, 2, ..., 9) ein Segment (21,..,32) bildet, wobei die einzelnen Segmente (21,..,32) voll- und/oder teilautomatisch umrüstbar ausgebildet sind.

10. Fertigungsanlage nach einem der Ansprüche 8 oder 9, **dadurch gekennzeichnet, dass** mehrere Druckweiterverarbeitungsmaschinen (1, 2, ...9) und/oder Segmente (21,..,32) der Fertigungsanlage (20) in Abhängigkeit vom jeweiligen Fertigungsauftrag (P1, P2, ...Pn) durch die Anlagensteuerung (10) zu einer Fertigungslinie (13) konfigurierbar sind und die Druckweiterverarlbeitungsmaschinen (1, 2, ...9) und/oder Segmente (21,..,32) der Fertigungsanlage (20) voll- oder teilautomatisch umrüstbar ausgebildet sind.

11. Fertigungsanlage nach einem der Ansprüche 8 bis 10, **dadurch gekennzeichnet, dass** die Produkterkennungseinrichtung (40) mit an den Druckweiterverarbeitungsmaschinen (1, 2, ...9) und/oder den Segmenten (21,..,32) angeordneten Sensoren verbunden sind.

12. Fertigungsanlage nach einem der Ansprüche 8 bis 11, **dadurch gekennzeichnet, dass** die Anlagensteuerung (10) sowie die Maschinensteuerungen (1a, 2a,.., 9a) über ein gemeinsames Bussystem (11) miteinander verbunden sind.

13. Fertigungsanlage nach Anspruch 11, **dadurch gekennzeichnet, dass** die Maschinensteuerungen (1a, 2a,.., 9a) der Druckweiterverarbeitungsmaschinen (1, 2, ..., 9) mit Sensoren zur Produkterkennung verbunden sind.

14. Fertigungsanlage nach einem der Ansprüche 8 bis 13, **dadurch gekennzeichnet, dass** die Anlagensteuerung (10) mit einer Statusanzeige-Einrichtung (53) verbunden ist.

## Claims

1. Method of resetting a production facility (20) having a master control (10) and consisting of a plurality of print finishing machines (1, 2, ..., 9) each with its own machine control (1a, 2a, ..., 9a) in which different production jobs (P₁, P₂, ...Pₙ) for processing partial products into finished products are executed in succession,
wherein
- the moment when a print finishing machine (1, 2, ..., 9) of the production facility (20) is vacated by the last partial product of a first production job (P₁, P₂, ...Pₙ) executed on the production facility (20) is detected,
- information is transmitted to the master control (10) by the machine control concerned (1a, 2a, ..., 9a) that the print finishing machine (1, 2, ..., 9) is ready to be reset for the next production job (P₁, P₂, ...Pₙ),
- the master control (10) transmits the reset instruction to the machine control concerned (1a, 2a, ..., 9a), whereupon
- the print finishing machine (1, 2, ..., 9) is fully automatically or partly automatically reset for the partial products of the next production job (P₁, P₂, ...Pₙ) to be processed on the production facility, and
- completion of the reset of this print finishing machine (1, 2, ..., 9) is detected, whereupon
- information that resetting is complete is transmitted to the master control (10) by the machine control (1 a, 2a, ..., 9a).

2. Method according to Claim 1, **characterized in that** at least one print finishing machine (1, 2, ..., 9) of the production facility (20) is divided into segments (21, ... , 32) and/or a segment (21, ..., 32) is formed from at least one print finishing machine (1, 2, ..., 9) and a segment (21, ..., 32) is reset as soon as a last partial product of a production job (P₁, P₂, ...Pₙ) vacates this segment.

3. Method according to Claim 1 or Claim 2, **characterized in that** the reset is effected once the last partial product of a production job (P₁, P₂, ...Pₙ) has vacated the print finishing machine (1, 2, ..., 9) or segment (21, ..., 32).

4. Method according to any one of Claims 1 to 3, **characterized in that** the print finishing machines (1, 2, ..., 9) of the production facility (20) are successively reset in the sequence in which they are vacated by the last partial product of a production job (P₁, P₂, ...Pₙ).

5. Method according to any one of Claims 1 to 4, **characterized in that** the resetting of the print finishing machines (1, 2, ..., 9) and/or segments (21, ..., 32) of the production facility (20) is centrally coordinated and/or controlled.

6. Method according to any one of Claims 1 to 5, **characterized in that** a plurality of the print finishing machines (1, 2, ..., 9) and/or segments (21, ..., 32) of the production facility (20) are configured in accordance with the individual production job to form a production flow line and the print finishing machines (1, 2, ..., 9) and/or segments (21, ..., 32) of the production flow lines are reset upon vacation of this print finishing machine (1, 2, ..., 9) and/or segment (21, ..., 32) by the last partial product of a production job (P₁, P₂, ...Pₙ).

7. Method according to Claim 6, **characterized in that** the configuration of the production flow line is performed by the master control (10).

8. Production facility with a master control (10), consisting of a plurality of print finishing machines (1, 2, ..., 9) each with its own machine control (1 a, 2a, ..., 9a), said production facility being capable of executing in succession different production jobs (P₁, P₂, ...Pₙ) for processing partial products into finished products and each print finishing machine (1, 2, ..., 9) having at least one fully automatic and/or one partly automatic setting device (50) connected to the master control (10) and in that [*sic*] the master control (10) is connected to a product identification device (40), the production facility carrying out, in operation, the method according to any one of Claims 1 to 7.

9. Production facility according to Claim 8, **characterized in that** at least one print finishing machine (1, 2, ..., 9) is divided into segments (21, ..., 32) and/or at least one print finishing machine (1, 2, ..., 9) forms a segment (21,..., 32), the individual segments (21,..., 32) being configured to be fully automatically and/or partly automatically resettable.

10. Production facility according to either of Claims 8 and 9, **characterized in that** a plurality of the print finishing machines (1, 2, ..., 9) and/or segments (21, ..., 32) of the production facility (20) are configurable by the master control (10) in accordance with the individual production job (P₁, P₂, ...Pₙ) to form a production flow line (13) and the print finishing machines (1, 2, ..., 9) and/or segments (21, ..., 32) of the production facility (20) are configured to be fully automatically and/or partly automatically resettable.

11. Production facility according to any one of Claims 8 to 10, **characterized in that** the product identification device (40) [is] connected to sensors mounted on the print finishing machines (1, 2, ..., 9) and/or segments (21, ..., 32).

12. Production facility according to any one of Claims 8 to 11, **characterized in that** the master control (10) and machine controls (1a, 2a, ..., 9a) are linked by a common bus system (11).

13. Production facility according to Claim 11, **characterized in that** the machine controls (1 a, 2a, ..., 9a) of the print finishing machines (1, 2, ..., 9) are connected to product identification sensors.

14. Production facility according to any one of Claims 8 to 13, **characterized in that** the master control (10) is connected to a status display device (53).

## Revendications

1. Procédé de remaniement adaptatif d'une installation de fabrication (20) équipée d'une commande (10) de l'installation et composée de plusieurs machines (1, 2, ..., 9) de poursuite d'impression, respectivement dotées d'une commande (1a, 2a, ..., 9a) de machine , dans lequel différents ordres de production (P₁, P₂, ... Pₙ) sont exécutés en succession mutuelle, pour traiter des produits partiels en vue d'obtenir des produits d'impression,
sachant
- qu'il s'opère une détermination de l'instant auquel un dernier produit partiel d'un premier ordre de production (P₁, P₂, ... Pₙ), exécuté dans l'installation de fabrication (20), a quitté une machine (1, 2, ..., 9) de poursuite de l'impression dans ladite installation de fabrication (20),
- que la commande considérée (1a, 2a, ..., 9a) d'une machine notifie, à la commande (10) de ladite installation, que ladite machine (1, 2, ..., 9) de poursuite de l'impression est prête à être transformée pour passer à l'ordre de production (P₁, P₂, ... Pₙ) suivant,
- que ladite commande (10) de l'installation notifie, à ladite commande considérée (1a, 2a, ..., 9a) de machine, l'instruction ciblant le remaniement adaptatif,
- ladite machine (1, 2, ..., 9) de poursuite de l'impression étant alors transformée, en mode intégralement ou partiellement automatique, pour correspondre aux produits partiels dudit ordre de production (P₁, P₂, ... Pₙ) suivant qui doivent être traités dans ladite installation de fabrication, et
- qu'il s'opère une détermination de l'instant auquel le remaniement adaptatif de cette machine (1, 2, ..., 9) de poursuite de l'impression est achevé, après quoi
- l'achèvement dudit remaniement adaptatif est notifié à ladite commande (10) de l'installation par ladite commande (1a, 2a, ..., 9a) de machine.

2. Procédé selon la revendication 1, **caractérisé par le fait qu'**au moins une machine (1, 2, ..., 9) de poursuite de l'impression est scindée en des segments (21, ..., 32), dans l'installation de fabrication (20), et/ou un segment (21, ..., 32) est formé à partir d'au moins une machine (1, 2, ..., 9) de poursuite de l'impression, et un segment (21, ..., 32) est transformé aussitôt qu'un dernier produit partiel d'un ordre de production (P₁, P₂, ... Pₙ) a quitté ce segment (21, ..., 32).

3. Procédé selon la revendication 1 ou 2, **caractérisé par le fait que** le remaniement adaptatif s'opère directement après qu'un dernier produit partiel d'un ordre de production (P₁, P₂, ... Pₙ) a quitté la machine (1, 2, ..., 9) de poursuite de l'impression, ou le segment (21, ..., 32).

4. Procédé selon l'une des revendications 1 à 3, **caractérisé par le fait que** les machines (1, 2, ..., 9) de poursuite de l'impression sont successivement transformées, dans l'installation de fabrication (20), dans l'ordre séquentiel dans lequel elles ont été quittées par un dernier produit partiel d'un ordre de production (P₁, P₂, ... Pₙ).

5. Procédé selon l'une des revendications 1 à 4, **caractérisé par le fait que** le remaniement adaptatif des machines (1, 2, ..., 9) de poursuite de l'impression, et/ou des segments (21, ..., 32) de l'installation de fabrication (20), est coordonné et/ou commandé en mode centralisé.

6. Procédé selon l'une des revendications 1 à 5, **caractérisé par le fait que** plusieurs machines (1, 2, ..., 9) de poursuite de l'impression et/ou segments (21, ..., 32) de l'installation de fabrication (20) sont configuré(e)s en une ligne de production, en fonction de l'ordre de production considéré, et lesdites machines (1, 2, ..., 9) de poursuite de l'impression et/ou lesdits segments (21, ..., 32) de ladite ligne de production sont transformé(e)s après qu'un dernier produit partiel d'un ordre de production (P₁, P₂, ... Pₙ) a quitté ces machines (1, 2, ..., 9) de poursuite de l'impression, et/ou ces segments (21, ..., 32).

7. Procédé selon la revendication 6, **caractérisé par le fait que** la configuration de la ligne de production est effectuée par l'intermédiaire de la commande (10) de l'installation.

8. Installation de fabrication équipée d'une commande (10) de l'installation et composée de plusieurs machines (1, 2, ..., 9) de poursuite d'impression, respectivement dotées d'une commande (1a, 2a, ..., 9a) de machine, ladite installation de fabrication se prêtant à l'exécution successive de différents ordres de production (P₁, P₂, ... Pₙ) pour traiter des produits partiels, en vue d'obtenir des produits d'impression, et lesdites machines (1, 2, ..., 9) de poursuite de l'impression étant respectivement pourvues d'au moins un dispositif de réglage (50) intégralement et/ou partiellement automatique, raccordé à la commande (10) de ladite installation ; et par le fait que ladite commande (10) de l'installation est raccordée à un dispositif (40) d'identification de produits, sachant que ladite installation de fabrication met en oeuvre, en service, le procédé conforme à l'une des revendications 1 à 7.

9. Installation de fabrication selon la revendication 8, **caractérisée par le fait qu'**au moins une machine (1, 2, ..., 9) de poursuite de l'impression est scindée en des segments (21, ..., 32), et/ou au moins une machine (1, 2, ..., 9) de poursuite de l'impression forme un segment (21, ..., 32), les segments (21, ..., 32) individuels étant réalisés avec faculté de remaniement adaptatif intégralement et/ou partiellement automatique.

10. Installation de fabrication selon l'une des revendications 8 ou 9, **caractérisée par le fait que** plusieurs machines (1, 2, ..., 9) de poursuite de l'impression et/ou segments (21, ..., 32) de ladite installation de fabrication (20) peuvent être configuré(e)s en une ligne de production (13) par l'intermédiaire de la commande (10) de ladite installation, en fonction de l'ordre de production (P₁, P₂, ... Pₙ) considéré, et lesdites machines (1, 2, ..., 9) de poursuite de l'impression et/ou lesdits segments (21, ..., 32) de ladite installation de fabrication (20) sont réalisé(e)s avec faculté de remaniement adaptatif intégralement et/ou partiellement automatique.

11. Installation de fabrication selon l'une des revendications 8 à 10, **caractérisée par le fait que** le dispositif (40) d'identification de produits est raccordé à des capteurs implantés sur les machines (1, 2, ..., 9) de poursuite de l'impression et/ou sur les segments (21, ..., 32).

12. Installation de fabrication selon l'une des revendications 8 à 11, **caractérisée par le fait que** la commande (10) de ladite installation, ainsi que les commandes (11a, 2a, ..., 9a) des machines, sont interconnectées par l'intermédiaire d'un système de bus (11) commun.

13. Installation de fabrication selon la revendication 11, **caractérisée par le fait que** les commandes (1a, 2a, ..., 9a) des machines (1, 2, ..., 9) de poursuite de l'impression sont raccordées à des capteurs, en vue de l'identification des produits.

14. Installation de fabrication selon l'une des revendications 8 à 13, **caractérisée par le fait que** la commande (10) de ladite installation est raccordée à un dispositif (53) d'affichage d'états.
